# EUROPEAN PATENT APPLICATION

(11) **EP 4 813 928 A1**
(43) Date of publication of application: **30.09.2026**
(21) Application number: 26163672.4
(22) Date of filing: 10.03.2026
(51) Int. Cl.: C01G 53/506, C01G 53/84, H01M 4/525

(54) **CATHODE ACTIVE MATERIAL, CATHODE MIXTURE, BATTERY, AND METHOD FOR PRODUCING CATHODE ACTIVE MATERIAL**

(30) Priority: 25.03.2025 JP 2025049918
(71) Applicant: Toyota Jidosha Kabushiki Kaisha, Toyota-shi, Aichi-ken 471-8571 (JP)
(72) Inventor: OHSAWA, Ryosuke, Toyota-shi, 471-8571 (JP)
(74) Representative: D Young & Co LLP

(57) **Abstract**

A main object of the present disclosure is to provide a cathode active material of which resistance is reduced.

The present disclosure achieves the object by providing a cathode active material including: a crystalline primary particle containing Li, TM, which is a transition metal, and O, wherein the cathode active material is a single crystalline active material configured by the primary particle; the cathode active material includes at least one of a compound A containing La, Ni, and O, and a compound B containing Li, W, and O, on a surface of the primary particle; the primary particle includes a crystal structure belonging to a space group R-3m; in an observation by a scanning electron microscope, the primary particle includes a long side that extends along (003) surface, and a short side that is connected to the long side and is shorter than the long side; an angle formed by the long side and the short side is 60° or more and 120° or less; a ratio of a length of the long side to a length of the short side is 1.1 or more; and the cathode active material satisfies at least one of (i) and (ii) below: (i) the cathode active material includes the compound A, and a ratio P_{SA} of the compound A in the short side is larger than a ratio P_{LA} of the compound A in the long side; (ii) the cathode active material includes the compound B, and a ratio P_{SB} of the compound B in the short side is larger than a ratio P_{LB} of the compound B in the long side.

## Description

### Technical Field

The present disclosure relates to a cathode active material, a cathode mixture, a battery, and a method for producing the cathode active material.

### Background Art

In recent years, the development of a battery has been actively carried out. For example, the development of a battery used for battery electric vehicles (BEV), plug-in hybrid electric vehicles (PHEV), or hybrid electric vehicles (HEV) has been advanced in the automobile industry. As a cathode active material used for a battery, an active material including a transition metal such as Ni, Co, and Mn has been known.

For example, Patent Literature 1 discloses a W-containing high nickel ternary cathode material of which chemical formula is LiₐNiₓCo_{y}Mn_{1-x-y}W_{b}M_{c}O₂, wherein the high nickel ternary cathode material includes a spherical secondary particle and a single crystalline particle at the same time, a W element is basically not included inside the single crystalline particle, and a W element is doped to the spherical secondary particle.

Patent Literature 2 discloses a single crystalline multi-element cathode material, wherein a ratio of a length of a longest diagonal line to a length of a shortest diagonal line of a single crystal particle of the single crystalline multi-element cathode material measured by a SEM is defined as a roundness R, and the R is 1 or more, D₁₀, D₅₀, and D₉₀ of the single crystal particle of the single crystalline multi-element cathode material satisfy K₉₀ = (D₉₀ - D₁₀)/ D₅₀, and a product of K₉₀ and R is 1.20 to 1.40.

### Citation List

### Patent Literatures

Patent Literature 1: Japanese Unexamined Patent Publication (JP-A) No. 2022-542774
Patent Literature 2: Japanese Unexamined Patent Publication (JP-A) No. 2024-511223

### Summary of Disclosure

### Technical Problem

From a viewpoint of improving performance of a battery, reduction of resistance has been required. The present disclosure has been made in view of the above circumstances and a main object thereof is to provide a cathode active material of which resistance is reduced.

### Solution to Problem

[1] A cathode active material comprising:
   a crystalline primary particle containing Li, TM, which is a transition metal, and O, wherein
   the cathode active material is a single crystalline active material configured by the primary particle;
   the cathode active material includes at least one of a compound A containing La, Ni, and O, and a compound B containing Li, W, and O, on a surface of the primary particle;
   the primary particle includes a crystal structure belonging to a space group R-3m;
   in an observation by a scanning electron microscope, the primary particle includes a long side that extends along (003) surface, and a short side that is connected to the long side and is shorter than the long side;
   an angle formed by the long side and the short side is 60° or more and 120° or less;
   a ratio of a length of the long side to a length of the short side is 1.1 or more; and
   the cathode active material satisfies at least one of (i) and (ii) below:
      (i) the cathode active material includes the compound A, and a ratio P_{SA} of the compound A in the short side is larger than a ratio P_{LA} of the compound A in the long side;
      (ii) the cathode active material includes the compound B, and a ratio P_{SB} of the compound B in the short side is larger than a ratio P_{LB} of the compound B in the long side.
[2] The cathode active material according to [1], wherein the cathode active material satisfies the (i).
[3] The cathode active material according to [1] or [2], wherein the cathode active material satisfies the (ii).
[4] The cathode active material according to any one of [1] to [3], wherein the cathode active material satisfies both of the (i) and the (ii).
[5] The cathode active material according to any one of [1] to [4], wherein the length of the long side is 0.5 µm or more.
[6] The cathode active material according to any one of [1] to [5], wherein the primary particle contains at least one kind of Ni, Co and Mn as the TM.
[7] The cathode active material according to any one of [1] to [6], wherein the compound A is in a particle shape.
[8] The cathode active material according to any one of [1] to [7], wherein the compound B is in a film shape.
[9] A cathode mixture comprising the cathode active material according to any one of [1] to [8].
[10] A battery comprising a cathode active material layer containing a cathode active material, an anode active material layer containing an anode active material, and an electrolyte layer arranged between the cathode active material layer and the anode active material layer, wherein
   the cathode active material layer contains the cathode mixture according to [9].
[11] A method for producing the cathode active material according to [4], the method comprising:
   a first burning step of burning a first mixture that includes: a transition metal hydroxide containing the TM; a Li source; and a Ni source, at a temperature T₁ to obtain a first burned body,
   a second burning step of burning a second mixture, which is produced by adding a molten salt and a La source to the first burned body, at a temperature T₂, which is higher than the temperature T₁, to obtain a second burned body,
   a third burning step of burning a third mixture, which is produced by adding a molten salt to the second burned body, at a temperature T₃, which is higher than the temperature T₂, to obtain a third burned body, and
   a fourth burning step of burning a fourth mixture, which is produced by adding a molten salt and a W source to the third burned body, at a temperature T₄, which is higher than the temperature T₃, to obtain a fourth burned body, wherein
   a content of the molten salt in the fourth mixture is more than a content of the molten salt in the third mixture.

### Advantageous Effects of Disclosure

The present disclosure exhibits an effect of providing a cathode active material of which resistance is reduced.

### Brief Description of Drawings

FIG. 1A is a schematic perspective view and FIG. 1B is a schematic side view exemplifying the cathode active material in the present disclosure.
FIG. 2 is a schematic cross-sectional view exemplifying the compound A and the compound B in the present disclosure.
FIG. 3 is a schematic side view exemplifying a cathode active material as a comparison to the cathode active material in the present disclosure.
FIG. 4 is a schematic side view exemplifying the cathode active material in the present disclosure.
FIG. 5 is a schematic cross-sectional view exemplifying the battery in the present disclosure.
FIG. 6 is a flow chart exemplifying the method for producing the cathode active material in the present disclosure.
FIG. 7 is an example of a burning temperature profile in the method for producing the cathode active material in the present disclosure.

### Description of Embodiments

Embodiments will be explained below with reference to drawings. However, the present disclosure is enforceable in a variety of different forms, and thus should not be taken as is limited to the contents described in the embodiments exemplified as below. Also, the drawings may show width, thickness, and shape of each part schematically comparing to the actual form in order to explain more clearly in some cases; however, it is merely an example, and thus does not limit the interpretation.

### A. Cathode active material

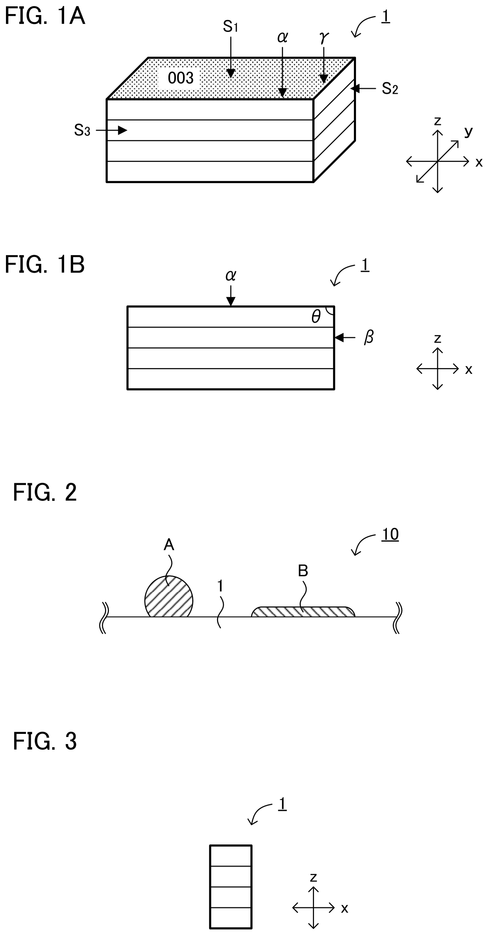

FIG. 1 is a schematic cross-sectional view exemplifying the cathode active material in the present disclosure. FIG. 2 is a schematic cross-sectional view exemplifying the compound A and the compound B in the present disclosure. As shown in FIGS. 1A, 1B, and FIG. 2, cathode active material 10 includes crystalline primary particle 1 containing Li, TM, which is a transition metal, and O. The cathode active material 10 is a single crystalline active material configured by the primary particle 1. The primary particle 1 has a crystal structure belonging to a space group R-3m. Also, as shown in FIG. 2, the cathode active material 10 includes at least one of a compound A containing La, Ni, and O, and a compound B containing Li, W, and O, on a surface (on a side configuring the surface) of the primary particle 1.

As shown in FIG. 1B, in an observation by a scanning electron microscope, the primary particle 1 includes a long side α that extends along (003) surface, and a short side β that is connected to the long side α and is shorter than the long side α. The angle formed by the long side α and the short side β is in the specified range. Further, an aspect ratio, which is a ratio of the length of the long side α to the short side β is also in the specified range. As shown in FIGS. 1A and 1B, the long side α is a side configuring first surface S₁, and the short side β is a side configuring second surface S₂.

As shown in FIGS. 1A, 1B, and FIG. 2, ratio P_{SA} of the compound A in the short side β (corresponding to the ratio of the compound A in the second surface S₂) is more than ratio P_{LA} of the compound A in the long side α (corresponding to the ratio of the compound A in the first surface S₁). Similarly, ratio P_{SB} of the compound B in the short side β (corresponding to the ratio of the compound B in the second surface S₂) is more than ratio P_{LB} of the compound B in the long side α (corresponding to the ratio of the compound B in the first surface S₁).

According to the present disclosure, since there is more of the compound A (compound containing La, Ni and O) with excellent electron conductivity present on the short side β (corresponding to the second surface) than on the long side α (corresponding to the first surface), the movement of electrons becomes smooth, and the reduction in resistance of the cathode active material is achieved. Similarly, since there is more of the compound B with excellent ion conductivity present on the short side β (the second surface) than on the long side α (the first surface), the movement of Li ions becomes smooth, and the reduction in resistance of the cathode active material is achieved.

Here, the crystal structure belonging to the space group R-3m has a structure wherein 3a site (Li layer) and 3b site (transition metal layer) are alternately layered. The extending direction (direction orthogonal to the layering direction) of the 3a site and the 3b site corresponds to so-called (003) surface. As shown in FIG. 1A, the first surface S₁ is a surface extending along the (003) surface. Also, since Li ions usually cannot move in the layering direction of the (003) surface, the first surface S₁ corresponds to a surface where Li ions do not pass through, and it is a surface of which deterioration due to materials such as a liquid electrolyte is little. In contrast, the second surface S₂ corresponds to a surface where Li ions pass through, and absorption and desorption of Li ions occur during charging and discharging. In the present disclosure, the resistance of the cathode active material is reduced by including a lot of the compound A or including a lot of the compound B, on the second surface S₂ where Li ions pass through.

Also, the primary particle in the present disclosure includes, in an observation by a scanning electron microscope, a long side extending along the (003) surface, and thus the rapid contraction of the Li layer during charging (at the time of Li desorption) can be inhibited. The Li desorption during charging occurs in a direction (such as x axis direction and y axis direction in FIG. 1A) orthogonal to a layering direction (such as z axis direction in FIG. 1A) of the (003) surface. Here, as shown in FIG. 3, when the primary particle 1 includes a long side in a layering direction (z axis direction) of the (003) surface, and includes a short side in a direction (x axis direction) orthogonal to the layering direction, Li desorption at the time of charging rapidly occurs, and there is a possibility that the Li layer rapidly contracts in the z axis direction. When the Li layer rapidly contracts, the layer structure may be destroyed, and the capacity may be degraded. In contrast, the primary particle in the present disclosure includes a long side that extends along the (003) surface. For this reason, rapid contraction of the Li layer during charging (during Li desorption) can be inhibited.

Also, since the compound B is present, resistance increase over time can be suppressed. The reason therefor is presumed as follows. That is, it is presumed that, since the compound A has excellent electron conductivity, it is possible to achieve the reduction of resistance, but the resistant component (decomposition product) is accumulated by side reactions of electron conduction, and the resistance increase over time occurs. In contrast, the compound B has appropriately low electron conductivity, and thus it is presumed that the accumulation of the resistant component (decomposition product) in the cathode active material can be suppressed, and the resistance increase over time can be suppressed.

Also, in Example 3 of Patent Literature 1 described above, a cathode material represented by Li_{1.0029}Ni_{0.83}Co_{0.11}Mn_{0.06}W_{0.0009}La_{0.002}O₂ is disclosed. In more specific, it is described that a mixture including a precursor A including Ni, Co, and Mn but not including W, a precursor B including Ni, Co, Mn, and W, LiOH, and La₂O₃, is burned at a high temperature of 880°C. However, Patent Literature 1 neither describes nor suggests about the compound A (compound containing La, Ni, and O) in the present disclosure.

Also, Patent Literature 2 described above discloses a cathode material represented by Li₁₊ₐ (NiₓCo_{y}Mn_{z}G_{b}) M_{c}O_{2-d}, wherein G is one kind or a multiple kinds of Ti, W, V, Ta, Zr, La, Ce, Er, Sr, Si, Al, B, Mg, Co, F, and Y. In other words, La is disclosed as one of the options of G. However, Patent Literature 2 does not disclose Examples using La at all.

### 1. Primary particle

The primary particle in the present disclosure is a crystalline particle containing Li, TM, which is a transition metal, and O. Also, the primary particle usually has a crystal structure belonging to a space group R-3m (layered rock salt type crystal structure).

### (1) Shape of primary particle

In an observation by a scanning electron microscope, the primary particle includes a long side that extends along (003) surface, and a short side that is connected to the long side and is shorter than the long side. The (003) surface can be specified in, for example, a high angle annular cyclic dark field scanning transmission electron microscope (HAADF-STEM) image. "Extending along the (003) surface" means that the angle formed by the long side and the (003) surface is 30° or less. the angle formed by the long side and the (003) surface may be 20° or less, and may be 10° or less.

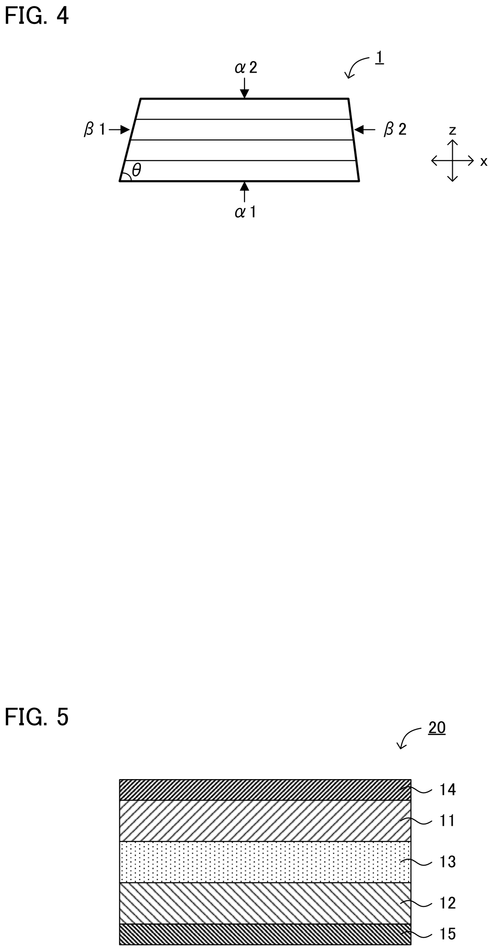

The long side is a side that extends along the (003) surface. For example, as shown in FIG. 4, when the primary particle 1 includes side α₁ and side α₂ as sides extending along the (003) surface, the side with large value (side α₁) is defined as the long side. Also, when the primary particle 1 includes side β₁ and side β₂ as sides connected to the long side (side α₁) and are shorter than the long side (side α₁), the side with large value side β₁) is defined as the short side.

The angle formed by the long side and the short side is usually 60° or more and 120° or less. The formed angle may be 70° or more, and may be 80° or more. Meanwhile, the formed angle may be 110° or less, and may be 100° or less. For example, when the connected part of the long side and the short side is in a curved shape, the formed angle refers to an angle formed by the extending direction of the long side and the extending direction of the short side. Also, a ratio (an aspect ratio) of the length of the long side to the length of the short side is usually 1.1 or more, may be 1.2 or more, may be 1.5 or more, may be 2.0 or more, and may be 2.5 or more. Meanwhile, the aspect ratio is, for example, 8.0 or less and may be 5.0 or less.

The length of the long side is, for example, 0.5 µm or more, may be 0.6 µm or more, may be 0.8 µm or more, and may be 1.0 µm or more. When the length of the long side is too small, the particle may not grow enough, and it may be difficult to be produced as a single crystal. Meanwhile, the length of the long side is, for example, 20 µm or less, may be 15 µm or less, may be 10 µm or less, and may be 5 µm or less. The length of the long side is obtained by an observation with a scanning electron microscope (SEM).

The angular degree of the primary particle is, for example, 400 or more and 599 or less, and may be 475 or more and 575 or less. When the angular degree is 400 or more and 599 or less, the two-dimensional image of the particle tends to be a shape close to a rectangular. Thus, the three-dimensional shape of the particle will be a shape close to a rectangular parallelepiped. "Angular degree" refers to an angular degree "Atotal" by Lees. "Atotal" is measured by a method described in "Lees, G.: A New Method for Determining the Angularity of Particles, Sedimentology, 3, 2-21, 1964".

As shown in FIGS. 1A and 1B, the first surface S₁ of the primary particle 1 extends along the (003) surface, and includes the long side α (side α). Also, the first surface S₁ does not include the short side β (side β). The shape of the first surface S₁ is, for example, a square. Among sides configuring the first surface S₁, the side connected to the side α is regarded as a side γ. The side γ is preferably shorter than the side α. The ratio (aspect ratio) of the length of the side α to the length of the side γ is, for example, 1.1 or more, may be 1.5 or more, may be 2.0 or more, and may be 2.5 or more. Meanwhile, the aspect ratio is, for example, 8.0 or less and may be 5.0 or less.

As shown in FIGS. 1A and 1B, the second surface S₂ of the primary particle 1 includes the short side β (side β), but does not include the long side α (side α). Also, the second surface S₂ includes the side γ. The shape of the second surface S₂ is, for example, a square. The second surface S₂ corresponds to a surface where Li ions pass through, and it extends along, for example, (104) surface. Also, as shown in FIGS. 1A and 1B, the primary particle 1 may include third surface S₃. The third surface S₃ includes the long side α (side α) and the short side β (side β), but does not include the side γ. The shape of the third surface S₃ is, for example, a square. The third surface S₃ also corresponds to a surface where Li ions pass through, similarly to the second surface S₂. The primary particle 1 includes, for example, the second surface S₂ and the third surface S₃ as the surfaces where Li ions pass through, but from the viewpoint of evaluating the ratio of the compound A and the compound B accurately, the surface S₂ is focused in the present disclosure.

### (2) Composition of primary particle

The primary particle contains Li, TM, which is a transition metal, and O. The primary particle may contain one kind of the transition metal, may contain two kinds of the transition metal, may contain three kinds of the transition metal, and may contain four or more kinds of the transition metal.

The transition metal is a metal belonging to the 3rd to the 11th groups in the periodic table. The transition metal included in the primary particle may be a metal belonging to the 3rd period, the 4th period, or the 5th period. Examples of the transition metal may include Ti, V, Cr, Mn, Fe, Co, Ni, Zr, Nb, La, and W.

The primary particle preferably contains at least Ni. The reason therefor is to obtain a cathode active material with excellent capacity properties. The ratio of Ni included in the primary particle when all the transition metals included in the primary particle is 1 part by mol is, for example, 0.25 parts by mol or more, may be 0.33 parts by mol or more, may be 0.50 parts by mol or more, may be 0.75 parts by mol or more, may be 0.80 parts by mol or more, and may be 0.90 parts by mol or more. The capacity properties improve when the ratio of Ni is increased.

The primary particle may or may not contain Co. The ratio of Co included in the primary particle when all the transition metals included in the primary particle is 1 part by mol is, for example, 0 part by mol or more, may be 0.05 parts by mol or more, and may be 0.10 parts by mol or more. Meanwhile, the ratio of Co included in the primary particle is, for example, 0.40 parts by mol or less, and may be 0.20 parts by mol or less.

The primary particle may or may not contain Mn. The ratio of Mn included in the primary particle when all the transition metals included in the primary particle is 1 part by mol is, for example, 0 part by mol or more, may be 0.05 parts by mol or more, and may be 0.10 parts by mol or more. Meanwhile, the ratio of Mn included in the primary particle is, for example, 0.40 parts by mol or less, and may be 0.20 parts by mol or less.

The primary particle preferably contains at least one kind of Ni, Co, and Mn. The total ratio of Ni, Co, and Mn included in the primary particle when all the transition metals (TM) included in the primary particle is 1 part by mol is, for example, 0.80 parts by mol or more, may be 0.90 parts by mol or more, and may be 0.95 parts by mol or more. Incidentally, "the total of Ni, Co, and Mn" includes the case where the ratio of one kind or two kinds of Ni, Co, and Mn is 0.

The primary particle may contain other metal M¹ (including semimetal) other than Li and the TM, in addition to Li and the TM. Examples of the other metal M¹ may include metals belonging to the 12th to the 14th groups in the periodic table. Examples of the metals belonging to the 12th to the 14th groups may include Zn, Al, Si, Ga, Ge, In, and Sn.

The composition of the primary particle is not particularly limited, and may be a composition represented by the general formula LiₓNiₐCo_{b}Mn_{c}O_{y}, in which 0.1 ≤ x ≤ 1.5, 0.5 ≤ a ≤ 1.0, 0 ≤ b ≤ 0.3, 0 ≤ c ≤ 0.3, a+b+c = 1.0, and 1.5 ≤ y ≤ 2.1.

The "x" may be 0.4 or more, 0.6 or more, 0.8 or more, 1.0 or more, or 1.05 or more, and may be 1.4 or less, or 1.2 or less.

The "y" may be 1.6 or more, 1.7 or more, 1.8 or more, or 1.9 or more, and may be 2.0 or less.

The "a" may be 0.6 or more, 0.7 or more, 0.8 or more, or 0.85 or more, and may be 0.9 or less.

The "b" may be 0.01 or more, 0.02 or more, 0.03 or more, 0.04 or more, 0.05 or more, 0.06 or more, 0.07 or more, or 0.075 or more, and may be 0.25 or less, 0.20 or less, 0.15 or less, 0.10 or less, 0.09 or less, or 0.08 or less.

The "c" may be 0.01 or more, 0.02 or more, 0.03 or more, 0.04 or more, 0.05 or more, 0.06 or more, 0.07 or more, or 0.075 or more, and may be 0.25 or less, 0.20 or less, 0.15 or less, 0.10 or less, 0.09 or less, or 0.08 or less.

### (3) Primary particle

The cathode active material in the present disclosure is usually a single crystalline active material configured by the primary particle. The single crystalline active material means that it is not a so-called polycrystalline active material (active material wherein multiple of primary particles aggregate without gaps). The single crystalline active material usually does not aggregate, and is present as one independent particle. In the single crystalline active material, it is preferable that the particle boundary is not confirmed in a scanning electron microscope (SEM) (magnification of about 10 thousand times to 30 thousand times). The single crystalline active material has an advantage such that the deterioration over time is less compared to the polycrystalline active material.

### 2. Compound A and compound B

The cathode active material in the present disclosure includes at least one of the compound A and the compound B on a surface of the primary particle.

When the cathode active material includes the compound A, a ratio P_{SA} of the compound A in the short side is preferably larger than a ratio P_{LA} of the compound A in the long side. The P_{SA} is obtained by confirming the present amount of the compound A in the short side using a scanning electron microscope - energy dispersive X-ray spectroscopy (SEM-EDX) or a transmission electron microscope - energy dispersive X-ray spectroscopy (TEM-EDX), and by dividing the present amount by the length of the short side. Similarly, the P_{LA} is obtained by confirming the present amount of the compound A in the long side using SEM-EDX or TEM-EDX, and by dividing the present amount by the length of the long side. Particularly when the compound A is in a particle shape, the present amount of the compound A is preferably specified as the number of particles. The ratio of the P_{SA} to the P_{LA}, which is P_{SA}/P_{LA} is, usually larger than 1.0, may be 1.1 or more, and may be 1.2 or more. Meanwhile, the P_{SA}/P_{LA} is, for example, 10 or less.

When the cathode active material includes the compound B, the ratio P_{SB} of the compound B in the short side is preferably larger than the ratio P_{LB} of the compound B in the long side. The P_{SB} is obtained by confirming the present amount of the compound B in the short side using SEM-EDX or TEM-EDX, and by dividing the present amount by the length of the short side. Similarly, the P_{LB} is obtained by confirming the present amount of the compound B in the long side using SEM-EDX or TEM-EDX, and dividing the present amount by the length of the long side. Particularly when the compound B is in a film shape, the present amount of the compound B is preferably specified as a length of the film that covers the short side. The ratio of P_{SB} to the P_{LB}, which is P_{SB}/P_{LB} is, for example, larger than 1.0, may be 1.1 or more, and may be 1.2 or more. Meanwhile, the P_{SB}/P_{LB} is, for example, 10 or less.

### (1) Compound A

The compound A in the present disclosure contains La, Ni, and O. The compound A usually has high electron conductivity, and thus the reduction in resistance may be achieved when the compound A is present on the surface of the primary particle. The compound A may be directly arranged, or may be arranged interposing another layer (another compound), on the surface of the primary particle, but the former is preferable.

The compound A contains at least La, Ni, and O. The compound A may be configured by only La, Ni, and O, and may further contain additional element. Examples of the additional element may include Li. In other words, the compound A may or may not contain Li. Examples of the composition of the compound A may include LaₐNi_{b}O_{c}, wherein 0.8 ≤ a ≤ 1.2, 0.8 ≤ b ≤ 1.2, 2.8 ≤ c ≤ 3.2. For example, LaNiO₃ is a typical Perovskite composition, and has excellent electron conductivity. Other examples of the composition of the compound A may include LaₐLi_{b}Ni_{c}O_{d}, wherein 3.5 ≤ a ≤ 4.5, 0.5 ≤ b ≤ 1.5, 0.5 ≤ c ≤ 1.5, and 7.5 ≤ d ≤ 8.5. For example, La₄LiNiO₈ is known to have excellent electron conductivity, and presumed to have a crystal phase similar to Perovskite.

The compound A may be crystalline, and may be amorphous, but the former is preferable. Excellent electron conductivity is obtained thereby. "Compound being crystalline" means that a peak derived from a targeted compound is confirmed by an X-ray diffraction using a CuKα ray. Meanwhile, "compound being amorphous" means that a peak derived from a targeted compound is not confirmed by an X-ray diffraction using a CuKα ray. Incidentally, when the targeted compound is amorphous, not a peak but a halo pattern may be observed.

The compound A preferably includes a crystal phase of Perovskite, or a crystal phase similar to Perovskite. The compound A preferably includes the crystal phase of at least one of LaNiO₃ and La₄LiNiO₈. Excellent electron conductivity is obtained thereby. Incidentally, the crystal phase includes a crystal phase in which a part of the constituent atoms (such as a part of O atom) is deficient, and a crystal phase in which a part of the constituent atoms (such as a part of La atom) is exceedingly present.

The compound A is preferably in a particle shape. "The compound A is in a particle shape" means that, in a cross-section image of the primary particle, when L₁ designates a length of the compound A in a normal direction of the surface of the primary particle, and L₂ designates a length of the compound A in a direction perpendicular to the normal direction, a ratio L₂/L₁, which is a ratio of L₂ to L₁ is 3.0 or less. The cross-section image of the primary particle is, for example, a SEM cross-section image.

The ratio of La included in the compound A when all the transition metals included in the primary particle is 1 part by mol is, for example, 0.001 parts by mol or more, may be 0.003 parts by mol or more, and may be 0.005 parts by mol or more. Meanwhile, the ratio of La included in the compound A is, for example, 0.100 parts by mol or less, may be 0.080 parts by mol or less, and may be 0.060 parts by mol or less.

The coverage of the compound A to the primary particle is not particularly limited, but for example, it is 10% or more and 90% or less, may be 20% or more and 80% or less, and may be 30% or more and 70% or less. The coverage of the compound A may be obtained by, for example, an outermost surface analysis with an XPS (X-ray spectroscopy method). For example, when the primary particle contains Ni, Co, and Mn as the transition metal TM, the La amount and each TM amount (Ni amount, Co amount, and Mn amount) are obtained by the outermost surface analysis with XPS, and La/ (La + TM) can be regarded as the coverage. The coverage of compounds B and C can be obtained in the same manner. Also, the electron conductivity of the compound A is usually higher than the electron conductivity of La₂O₃. The electron conductivity of the compound A at 25°C is, for example, 5.0 * 10⁻⁴ S/cm or more, and may be 1.0 * 10⁻³ S/cm or more. Also, the compound A (compound containing La, Ni, and O) is arranged on a surface of the primary particle. The primary particle may or may not contain La.

### (2) Compound B

The cathode active material in the present disclosure includes a compound B containing Li, W, and O on a surface of the primary particle. The compound B usually has high ion conductivity, and thus the reduction in resistance may be achieved when the compound B is present on the surface of the primary particle. Also, since the compound B is present on the surface of the primary particle, resistance increase over time can be suppressed. The compound B may be directly arranged, or may be arranged interposing another layer (another compound), on the surface of the primary particle, but the former is preferable.

The compound B contains at least Li, W, and O. The compound B may be configured by only Li, W, and O, and may further contain additional element. One example of the composition of the compound B may be LiₐW_{b}O_{c}, wherein 5.5 ≤ a ≤ 6.5, 0.5 ≤ b ≤ 1.5, and 5.5 ≤ c ≤ 6.5. The compound B having the composition above is typically Li₆WO₆. Another example of the composition of the compound B may be LiₐW_{b}O_{c}, wherein 1.5 ≤ a ≤ 2.5, 0.5 ≤ b ≤ 1.5, and 3.5 ≤ c ≤ 4.5. The compound B having the composition above is typically Li₂WO₄. Also, another example of the composition of the compound B may be LiₐW_{b}O_{c}, wherein 3.5 ≤ a ≤ 4.5, 0.5 ≤ b ≤ 1.5, and 4.5 ≤ c ≤ 5.5. The compound B having the composition above is typically Li₄WO₅. Further, another example of the composition of the compound B may be LiₐW_{b}O_{c}, wherein 1.5 ≤ a ≤ 2.5, 1.5 ≤ b ≤ 2.5, and 6.5 ≤ c ≤ 7.5. The compound B having the composition above is typically Li₂W₂O₇.

The compound B may be crystalline, and may be amorphous. Also, the compound B is preferably in a film shape. "The compound B is in a film shape" means that, in a cross-section image of the primary particle, when L₃ designates a length of the compound B in a normal direction of the surface of the primary particle, and L₄ designates a length of the compound B in a direction perpendicular to the normal direction, a ratio L₄/L₃, which is a ratio of L₄ to L₃ is more than 3.0. The cross-section image of the primary particle is, for example, a cross-section image of a transmission microscope (TEM). The thickness (length L₃) of the compound B is not particularly limited, and for example, it is 0.5 nm or more and 20 nm or less, and may be 1 nm or more and 15 nm or less. The thickness of the compound B is obtained as an average value of at least 5 points measured by the TEM observation.

The ratio of W included in the compound B when all the transition metals included in the primary particle is 1 part by mol is, for example, 0.001 parts by mol or more, may be 0.003 parts by mol or more, and may be 0.005 parts by mol or more. Meanwhile, the ratio of W included in the compound B is, for example, 0.100 parts by mol or less, may be 0.080 parts by mol or less, and may be 0.060 parts by mol or less.

The coverage of the compound B to the primary particle is not particularly limited, and for example, it is 10% or more and 90% or less, may be 20% or more and 80% or less, and may be 30% or more and 70% or less. Also, the ion conductivity of the compound B is usually higher than the ion conductivity of W₂O₃. Ion conductivity of the compound B at 25°C is, for example, 1.0 * 10⁻⁵ S/cm or more, and may be 1.0* 10⁻⁴ S/cm or more. Also, the compound B (compound containing Li, W, and O) is arranged on a surface of the primary particle. The primary particle may or may not contain W.

### 3. Cathode active material

The cathode active material in the present disclosure is a single crystalline active material configured by a crystalline primary particle containing Li, TM, which is a transition metal, and O as a cathode active material. Further, the cathode active material includes the compound A and the compound B on a surface of the primary particle. The cathode active material is usually used for a battery. Also, there are no particular limitations on the method for producing the cathode active material, and examples thereof may include the method described in "D. Method for producing cathode active material" later.

The present disclosure can also provide a cathode active material powder including: a plurality of single crystalline active material configured by a crystalline primary particle that contains Li, TM, which is a transition metal, and O, as a cathode active material, and includes a crystal structure belonging to a space group R-3m, wherein at least a part of the plurality of single crystalline active material is a single crystalline active material X; the single crystalline active material X includes at least one of a compound A containing La, Ni, and O, and a compound B containing Li, W, and O, on a surface of the primary particle; in an observation by a scanning electron microscope, the primary particle in the single crystalline active material X includes a long side that extends along (003) surface, and a short side that is connected to the long side and is shorter than the long side; an angle formed by the long side and the short side is 60° or more and 120° or less; a ratio of a length of the long side to a length of the short side is 1.1 or more; and the single crystalline active material X satisfies at least one of (i) and (ii) below: (i) the single crystalline active material X includes the compound A, and a ratio P_{SA} of the compound A in the short side is larger than a ratio P_{LA} of the compound A in the long side; (ii) the single crystalline active material X includes the compound B, and a ratio P_{SB} of the compound B in the short side is larger than a ratio P_{LB} of the compound B in the long side. The single crystalline active material X is the same as the above described cathode active material. Also, the rate of the single crystalline active material X to all the cathode active materials in the cathode active material powder is, for example, 5 mass% or more, may be 10 mass% or more, may be 20 mass% or more, may be 30 mass% or more, may be 40 mass% or more, may be 50 mass% or more, may be 60 mass% or more, and may be 70 mass% or more.

### B. Cathode mixture

The cathode mixture in the present disclosure contains the above described cathode active material.

According to the present disclosure, the above described cathode active material is used, and thus a cathode mixture of which resistance is reduced may be achieved. The cathode mixture may contain other materials (such as a conductive material and a binder) in addition to the cathode active material. Also, the cathode mixture may contain the above described cathode active material powder. Also, the cathode mixture may be in a powder shape, and may be in a slurry shape containing a dispersion medium.

The rate of the cathode active material in a solid content of the cathode mixture is, for example, 20 mass% or more, may be 30 mass% or more and may be 40 mass% or more. If the rate of the cathode active material is too little, there is a possibility that sufficient energy density may not be obtained. Meanwhile, the rate of the cathode active material in the solid content of the cathode mixture is, for example, 95 mass% or less, may be 70 mass% or less and may be 60 mass% or less. If the rate of the cathode active material is too much, there is a possibility that the ion conductivity and the electron conductivity may be relatively degraded.

The cathode mixture may contain a conductive material. By adding the conductive material, electron conductivity improves. Examples of the conductive material may include a carbon-based material, a metal particle, and a conductive polymer. Examples of the carbon-based conductive material may include a particulate carbon material such as acetylene black (AB) and Ketjen black (KB), and a fiber carbon material such as vapor grown carbon fiber (VGCF), carbon nanotube (CNT), and carbon nanofiber (CNF).

The rate of the conductive material in the solid content of the cathode mixture is, for example, 0.1 mass% or more. If the rate of the conductive material is too little, there is a possibility that the electron conduction path may be insufficient. Meanwhile, the rate of the conductive material in the solid content of the cathode mixture is, for example, 5 mass% or less. If the rate of the conductive material is too much, the rate of the cathode active material would be relatively little, and there is a possibility the energy density may decrease.

The cathode mixture may contain a binder. By adding the binder, the cathode active material layer in which the cathode active material does not easily fall off can be obtained. Examples of the binder may include a rubber-based binder such as styrene butadiene rubber (SBR), and butadiene rubber (BR); a polycarbonate-based binder such as carboxymethylcellulose; and a fluoride-based binder such as polyvinylidene fluoride (PVdF).

The rate of the binder in the solid content of the cathode mixture is, for example, 0.5 mass% or more. If the rate of the binder is too little, there is a possibility that the falling off of the cathode active material may not be sufficiently inhibited. Meanwhile, the rate of the binder in the solid content of the cathode mixture is, for example, 15 mass% or less. If the rate of the binder is too much, the rate of the cathode active material would be relatively little, and there is a possibility the energy density may decrease.

### C. Battery

FIG. 5 is a schematic cross-sectional view exemplifying the battery in the present disclosure. Battery 20 shown in FIG. 5 includes cathode active material layer 11, anode active material layer 12, electrolyte layer 13 arranged between the cathode active material layer 11 and the anode active material layer 12, cathode current collector 14 for collecting currents of the cathode active material layer 11, and anode current collector 15 for collecting currents of the anode active material layer 12. In the present disclosure, the cathode active material layer 11 contains the cathode mixture described in "B. Cathode mixture" above.

According to the present disclosure, by using the above described cathode mixture, a battery of which resistance is reduced may be achieved.

### 1. Cathode active material layer

The cathode active material layer contains at least a cathode active material. Also, the cathode active material layer may contain a conductive material and a binder. The cathode active material, the conductive material, and the binder are in the same contents as those described in "A. Cathode active material" above and "B. Cathode mixture" above.

The cathode active material layer may contain an electrolyte. The electrolyte is, for example, the later described liquid electrolyte. Meanwhile, the cathode active material layer may contain a solid electrolyte. The thickness of the cathode active material layer is, for example, 0.1 µm or more and 1000 µm or less, may be 1 µm or more and 500 µm or less, and may be 30 µm or more and 100 µm or less.
here are no particular limitations on the method for producing the cathode active material layer, and examples thereof may include a method in which a cathode slurry containing a cathode active material and a dispersion medium is applied on the cathode current collector and dried. Pressing treatment may be performed to the cathode active material layer after drying. By the pressing treatment, density of the cathode active material layer improves.

### 2. Anode active material layer

The anode active material layer contains at least an anode active material. Examples of the anode active material may include a carbon-based active material, a Li-based active material, a Si-based active material, and an oxide-based active material.

Examples of the carbon-based active material may include graphite, soft carbon, and hard carbon. The graphite may be a natural graphite, and may be an artificial graphite. Examples of the Li-based active material may include Li and a Li alloy. Examples of the Li alloy may include a Li-Si alloy. Examples of the Si-based active material may include Si, a SiC composite active material, a Si alloy and a Si oxide. Examples of the SiC composite active material may include an active material in which a carbon carrier is supported by Si or a Si alloy. examples of the oxide-based active material may include a lithium titanate such as Li₄Ti₅O₁₂.

The rate of the anode active material in the anode active material layer is, for example, 20 mass% or more, may be 30 mass% or more and may be 40 mass% or more. If the rate of the anode active material is too little, there is a possibility that sufficient energy density may not be obtained. Meanwhile, the rate of the anode active material in the anode active material layer is, for example, 95 mass% or less, may be 70 mass% or less and may be 60 mass% or less. If the rate of the anode active material is too much, there is a possibility that the ion conductivity and the electron conductivity in the anode active material layer may be relatively degraded.

The anode active material layer may contain at least one of a conductive material, a binder, and an electrolyte. The details of the conductive material, the binder, and the electrolyte are in the same contents as those described in "1. Cathode active material layer" above. Also, the thickness of the anode active material layer is, for example, 0.1 µm or more and 1000 µm or less, may be 1 µm or more and 500 µm or less, and may be 30 µm or more and 100 µm or less.

There are not particular limitations on the method for producing the anode active material layer, and examples thereof may include a method in which an anode slurry containing an anode active material and a dispersion medium is applied on the anode current collector and dried. Pressing treatment may be performed to the anode active material layer after drying. By the pressing treatment, density of the anode active material layer improves.

### 3. Electrolyte layer

The electrolyte layer is a layer arranged between the cathode active material layer and the anode active material layer, and contains at least an electrolyte. The electrolyte is, for example, an electrolyte solution (liquid electrolyte).

Examples of the electrolyte may include a non-aqueous liquid electrolyte. The non-aqueous liquid electrolyte contains, for example, a lithium salt and a non-aqueous solvent. Examples of the lithium salt may include an inorganic lithium salt such as LiPF₆, LiBF₄, LiClO₄ and LiAsF₆; and an organic lithium salt such as LiCF₃SO₃, LiN(SO₂CF₃)₂, LiN(SO₂C₂F₃)₂, and LiC(SO₂CF₃)₃.

Examples of the non-aqueous solvent may include a carbonate-based solvent such as ethylene carbonate (EC), propylene carbonate (PC), butylene carbonate (BC), dimethyl carbonate (DMC), diethyl carbonate (DEC), and ethyl methyl carbonate (EMC). The non-aqueous solvent may be a mixture of cyclic carbonate having high dielectric constant and high viscosity such as EC and PC with chain carbonate having low dielectric constant and low viscosity such as DMC, DEC, and EMC. The concentration of the lithium salt in the non-aqueous liquid electrolyte is, for example, 0.3 M or more and 5 M or less. Also, the non-aqueous liquid electrolyte may include an ionic solution. Examples of the ionic solution may include sulfonium salt, ammonium salt, pyridinium salt, piperidinium salt, pyrrolidinium salt, morpholinium salt, phosphonium salt, and imidazolium salt.

Examples of other electrolytes may include a water-based liquid electrolyte. The water-based liquid electrolyte is an electrolyte including water as a main component of the solvent. The proportion of water to all the solvent is, for example, 50 mass% or more, and may be 70 mass% or more. Examples of the lithium salt used in the water-based liquid electrolyte may include an imide-based electrolyte such as lithiumbis(fluorosulfonil)imide, and lithiumbis(trifluoromethanesulfonil)imide. The concentration of the lithium salt in water-based liquid electrolyte is, for example, 1 M or more and 25 M or less.

The electrolyte layer may include a separator impregnated with the above described liquid electrolyte. By arranging the separator, occurrence of short circuit can be inhibited. The separator is, for example, a porous film. Examples of the materials of the separator may include a resin such as polyethylene, polypropylene, polyester, polyvinyl alcohol, cellulose, and polyamide. Also, the electrolyte layer may contain a solid electrolyte. Examples of the solid electrolyte may include an organic solid electrolyte such as a polymer electrolyte and a gel electrolyte; and an inorganic solid electrolyte such as a sulfide solid electrolyte, an oxide solid electrolyte, and a halide solid electrolyte.

### 4. Battery

The battery in the present disclosure preferably includes a cathode current collector for collecting currents of the cathode active material layer, and an anode current collector for collecting currents of the anode active material layer. Examples of the material for the cathode current collector may include SUS, aluminum, nickel, iron, titanium, and carbon. Meanwhile, examples of the material for the anode current collector may include SUS, copper, nickel, and carbon. Also, the battery in the present disclosure may include an outer package for storing a power generation elements (the cathode active material layer, the electrolyte layer, and the anode active material layer). Examples of the outer package may include a case type outer package and a laminate type outer package.

The kind of the battery in the present disclosure is not particularly limited, but is typically a lithium ion battery. Also, the battery in the present disclosure may be a primary battery and may be a secondary battery, but preferably a secondary battery among them. The reason therefor is to be repeatedly charged and discharged and useful as a car-mounted battery for example. Examples of the applications of the battery may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery may be used as a power source for moving bodies other than vehicles (such as rail road transportation, vessel and airplane), and may be used as a power source for electronic products such as information processing equipment.

### D. Method for producing cathode active material

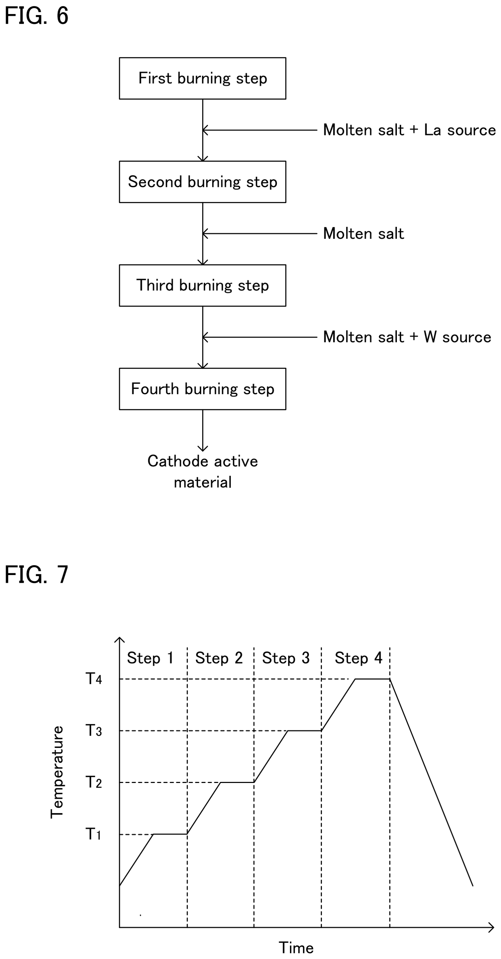

FIG. 6 is a flow chart exemplifying the method for producing the cathode active material in the present disclosure. FIG. 7 is an example of a burning temperature profile in the method for producing the cathode active material in the present disclosure. In FIG. 6 and FIG. 7, first, a first mixture that includes: a transition metal hydroxide containing the TM; a Li source; and a Ni source, is burned at a temperature T₁ to obtain a first burned body (first burning step, step 1). Next, a second mixture, which is produced by adding a molten salt and a La source to the first burned body, is burned at a temperature T₂, which is higher than the temperature T₁, to obtain a second burned body (second burning step, step 2). Next, a third mixture, which is produced by adding a molten salt to the second burned body, is burned at a temperature T₃, which is higher than the temperature T₂, to obtain a third burned body (third burning step, step 3). Next, a fourth mixture, which is produced by adding a molten salt and a W source to the third burned body, is burned at a temperature T₄, which is higher than the temperature T₃, to obtain a fourth burned body (fourth burning step, step 4). In the present disclosure, a content of the molten salt in the fourth mixture is more than a content of the molten salt in the third mixture.

According to the present disclosure, by performing the first burning step to the fourth burning step, a cathode active material of which resistance is reduced can be obtained.

### 1. First burning step

The first burning step is a step of burning a first mixture that includes: a transition metal hydroxide containing the TM; a Li source; and a Ni source, at a temperature T₁ to obtain a first burned body.

The transition metal hydroxide contains a TM, which is a transition metal. The transition metal hydroxide corresponds to a precursor of the cathode active material. The transition metal hydroxide typically does not contain Li, but may contain Li. Also, the transition metal hydroxide may or may not contain La. Also, the transition metal hydroxide may or may not contain W. Also, the transition metal hydroxide may or may not contain Ni.

There are no particular limitations on the method for synthesizing the transition metal hydroxide, and examples thereof may include a following method. First, a raw material aqueous solution of the transition metal hydroxide is prepared. Examples of the method for preparing the raw material aqueous solution may include a method in which the water soluble transition metal compound is dissolved in water. Examples of the transition metal compound may include a metal salt such as a sulfate and a nitrate. Examples of the Ni source may include NiSO₄, and Ni(NO₃)₂. Examples of the Co source may include CoSO₄, Co(NO₃)₂, and Co(NO₃)₃. Examples of the Mn source may include MnSO₄, and Mn(NO₃)₂. The composition of the raw material aqueous solution is appropriately adjusted in accordance with the intended cathode active material.

In the first burning step, a first mixture including a transition metal hydroxide, a Li source, and a Ni source, is prepared. Examples of the Li source may include lithium hydroxide, lithium carbonate, lithium nitrate, lithium acetate, lithium oxide, and lithium chloride. The Li source may be lithium hydroxide, and may be a Li-containing compound other than the lithium hydroxide. The molar ratio of Li in the Li source to the TM included in the transition metal hydroxide is, for example, 0.8 or more and 1.2 or less, may be 0.9 or more and 1.1 or less, and may be 1.0. Also, for example, when the transition metal hydroxide includes Ni, the transition metal hydroxide may also work as the Ni source. Meanwhile, when the transition metal hydroxide does not include Ni, it is necessary to use the Ni source separately.

Next, a sodium hydroxide aqueous solution is added to a reaction container, and the raw material aqueous solution and NH₃ aqueous solution are dropped thereto while maintaining the pH alkaline (such as pH 11.3 to 12.0). The reaction temperature is not particularly limited, but for example, it is 50°C or more and 65°C or less. After the reaction completed, it is preferable to take out the transition metal hydroxide by filtrating, and to dry it after washing with water.

In the first burning step, the first mixture is burned at the temperature T₁ to obtain a first burned body. The temperature T₁ is, for example, 400°C or more and 700°C or less, and may be 450°C or more and 650°C or less. The burning time in the first burning step is not particularly limited, and for example, it is 1 hours or more and 10 hours or less. The atmosphere in the first burning step is usually an atmosphere wherein oxygen is present. Examples of the burning method in the first burning step may include a method using a burning furnace such as a muffle furnace and an electric furnace.

### 2. Second burning step

The second burning step is a step of burning a second mixture, which is produced by adding a molten salt and a La source to the first burned body, at a temperature T₂, which is higher than the temperature T₁, to obtain a second burned body.

The molten salt included in the second mixture works as a flux, and the primary particle can sufficiently grow. The molten salt may contain Li. Examples of the molten salt may include lithium hydroxide. The molar ratio (Li/TM) of Li included in the molten salt to the TM included in the first burned body is, for example, 0.01 or more, may be 0.05 or more, may be 0.10 or more, and may be 0.15 or more. Meanwhile, the Li/TM is, for example, 0.60 or less, may be 0.50 or less, may be 0.40 or less, and may be 0.30 or less.

Examples of the La source may include a hydroxide; and a metal salt such as a sulfate and a nitrate. Examples of the La source may include La(OH)₃, LaSO₄, and La(NO₃)₃. The adding amount of the La source is appropriately adjusted in accordance with the intended cathode active material.

In the second burning step, the second mixture is burned at the temperature T₂, which is higher than the temperature T₁, to obtain a second burned body. The difference between the temperature T₂ and the temperature T₁ is, for example, 50°C or more and 150°C or less, and may be 75°C or more and 125°C or less. The temperature T₂ is, for example, 500°C or more and 800°C or less, and may be 550°C or more and 750°C or less. Also, from after finishing the first burning step to before starting the second burning step, the temperature in the burning furnace may be, for example, maintained at the temperature T₁, and after producing the second mixture by adding the molten salt and the La source to the first burned body, the second burning step may be performed by placing the second mixture in the burning furnace in which the temperature T₁ is maintained. The burning time in the second burning step is not particularly limited, and for example, it is 1 hour or more and 10 hours or less. The atmosphere and the method for burning in the second burning step are not particularly limited, and are the same as the atmosphere and the method for burning in the first burning step described above.

### 3. Third burning step

The third burning step is a step of burning a third mixture, which is produced by adding a molten salt to the second burned body, at a temperature T₃, which is higher than the temperature T₂, to obtain a third burned body.

The molten salt included in the third mixture works as a flux, and the primary particle can sufficiently grow. The molten salt is in the same contents as those described above. The molar ratio (Li/TM) of Li included in the molten salt to the TM included in the second burned body is, for example, 0.01 or more, may be 0.05 or more, may be 0.10 or more, and may be 0.15 or more. Meanwhile, the Li/TM is, for example, 0.60 or less, may be 0.50 or less, may be 0.40 or less, and may be 0.30 or less.

In the third burning step, the third mixture is burned at the temperature T₃, which is higher than the temperature T₂, to obtain a third burned body. The difference between the temperature T₃ and the temperature T₂ is, for example, 50°C or more and 150°C or less, and may be 75°C or more and 125°C or less. The temperature T₃ is, for example, 600°C or more and 900°C or less, and may be 650°C or more and 850°C or less. Also, from after finishing the second burning step to before starting the third burning step, the temperature in the burning furnace may be, for example, maintained at the temperature T₂, and after producing the third mixture by adding the molten salt to the second burned body, the third burning step may be performed by placing the third mixture in the burning furnace in which the temperature T₂ is maintained. The burning time in the third burning step is not particularly limited, and for example, it is 1 hour or more and 10 hours or less. The atmosphere and the method for burning in the third burning step are not particularly limited, and are the same as the atmosphere and the method for burning in the first burning step described above.

### 4. Fourth burning step

The fourth burning step is a step of burning a fourth mixture, which is produced by adding a molten salt and a W source to the third burned body, at a temperature T₄, which is higher than the temperature T₃, to obtain a fourth burned body.

The molten salt included in the fourth mixture works as a flux, and the primary particle can sufficiently grow. The molten salt may contain Li. Examples of the molten salt may include lithium hydroxide. The molar ratio (Li/TM) of Li included in the molten salt to the TM included in the third burned body is, for example, 0.1 or more, may be 0.2 or more, may be 0.3 or more, and may be 0.4 or more. Meanwhile, the Li/TM is, for example, 1.0 or less, may be 0.9 or less, and may be 0.8 or less.

In the present disclosure, a content (C₄) of the molten salt in the fourth mixture is more than a content (C₃) of the molten salt in the third mixture. When the C₄ is more than the C₃, the above described cathode active material is easily obtained. The rate of the C₄ with respect to the C₃, which is C₄/C₃ is, for example, 1.2 or more, may be 1.5 or more, may be 2.0 or more, and may be 3.0 or more. Meanwhile, the C₄/C₃ is, for example, 10 or less.

In the present disclosure, a content (C₄) of the molten salt in the fourth mixture may be more than a content (C₂) of the molten salt in the second mixture. The rate of the C₄ with respect to the C₂, which is C₄/C₂ is, for example, 1.2 or more, may be 1.5 or more, may be 2.0 or more, and may be 3.0 or more. Meanwhile, the C₄/C₂ is, for example, 10 or less.

Examples of the W source may include H₂WO₄. The adding amount of the W source is appropriately adjusted in accordance with the intended cathode active material.

In the fourth burning step, the fourth mixture is burned at the temperature T₄, which is higher than the temperature T₃, to obtain a fourth burned body. The difference between the temperature T₄ and the temperature T₃ is, for example, 50°C or more and 150°C or less, and may be 75°C or more and 125°C or less. The temperature T₄ is, for example, 700°C or more and 1000°C or less, and may be 750°C or more and 950°C or less. Also, from after finishing the third burning step to before starting the fourth burning step, the temperature in the burning furnace may be, for example, maintained at the temperature T₃, and after producing the fourth mixture by adding the molten salt and the W source to the third burned body, the fourth burning step may be performed by placing the fourth mixture in the burning furnace in which the temperature T₃ is maintained. The burning time in the fourth burning step is not particularly limited, and for example, it is 1 hour or more and 10 hours or less. The atmosphere and the method for burning in the fourth burning step are not particularly limited, and are the same as the atmosphere and the method for burning in the first burning step described above.

### 5. Cathode active material

The cathode active material obtained by the above described each steps is in the same contents as those described in "A. Cathode active material" above.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Examples

### [Comparative Example 1]

### <Production of cathode active material>

As raw materials, NiSO₄, CoSO₄, and MnSO₄ were prepared, and these were dissolved in an ion exchanged water to prepare a raw material aqueous solution. The ratio of Ni, Co, and Mn in the raw material aqueous solution was Ni : Co : Mn = 8 : 1 : 1 in the molar ratio. Also, the concentration of the raw material aqueous solution (ratio of all the raw materials to the raw material aqueous solution) was 30 mass%.

After that, fixed amount of NH₃ aqueous solution was put in a reaction container, and inside the reaction container was substituted with nitrogen by stirring with a stirrer. NaOH aqueous solution was added to the reaction container, and the raw material aqueous solution and NH₃ aqueous solution were dropped thereto while maintaining the pH alkaline (pH = 12) and controlling the temperature constant, and thereby a transition metal hydroxide was deposited. The reaction temperature was 60°C, and the reaction time was 10 hours. Next, the deposited transition metal hydroxide was taken out by filtration, and washed by adding an ion exchanged water and dispersing with a spoon. The transition metal hydroxide after washed by the water was dried in the conditions of 120°C and 16 hours, and thereby a transition metal hydroxide that was a precursor was obtained.

After that, a Li source (LiOH) was added to the obtained precursor, mixed with an agate mortar, and thereby a first mixture was obtained. The adding amount of the Li source was adjusted so that a molar ratio (Li/NMC) of Li included in the Li source to the+ total (NCM) of Ni, Co, and Mn included in the precursor became 1.0. The obtained first mixture was burned in a burning furnace in the conditions of 600°C, an oxygen atmosphere, and 2 hours, to obtain a first burned body (step 1). After that, the first burned body was taken out from the burning furnace while maintaining the temperature in the burning furnace at 600°C, a molten salt containing Li (LiOH) was added thereto, mixed with an agate mortar, and thereby a second mixture was obtained. The adding amount of the molten salt was adjusted so that Li/NCM became 0.3. The obtained second mixture was returned to the burning furnace in which 600°C was maintained, the temperature was raised until 700°C, and burned in the conditions of an oxygen atmosphere and 2 hours, to obtain a second burned body (step 2).

Next, the second burned body was taken out from the burning furnace while maintaining the temperature in the burning furnace at 700°C, a molten salt containing Li (LiOH) was added thereto, mixed with an agate mortal, and thereby a third mixture was obtained. The adding amount of the molten salt was adjusted so that Li/NCM became 0.3. The obtained third mixture was returned to the burning furnace in which 700°C was maintained, the temperature was raised until 800°C, and burned in the conditions of an oxygen atmosphere and 2 hours, to obtain a third burned body (step 3). After that, the third burned body was taken out from the burning furnace while maintaining the temperature in the burning furnace at 800°C, a molten salt containing Li (LiOH) was added thereto, mixed with an agate mortar, and thereby a fourth mixture was obtained. The adding amount of the molten salt was adjusted so that Li/NCM became 0.3. The obtained fourth mixture was returned to the burning furnace in which 800°C was maintained, the temperature was raised until 900°C, and burned in the conditions of an oxygen atmosphere and 2 hours, to obtain a fourth burned body (step 4). The obtained fourth burned body was cracked using jet milling, the particle size was adjusted, and thereby a cathode active material was obtained.

### <Production of battery>

A battery was produced using the obtained cathode active material. In specific, a cathode mixture paste including a cathode active material, a conductive material (acetylene black), and a binder (polyvinylidene fluoride) in a mass ratio of the cathode active material : the conductive material : the binder = 88 : 10 : 2, was applied on a surface of a metal foil that was a cathode current collector using a film applicator with film thickness adjusting function (from Allgood Corporation). After that, the product was dried by a dryer at 80°C for 5 minutes, and a cathode including the cathode current collector and the cathode active material layer was obtained.

Next, an anode mixture paste including an anode active material (natural graphite) and a binder (SBR and CMC) was applied on a surface of a metal foil that was an anode current collector using a film applicator with film thickness adjusting function (from Allgood Corporation). After that, the product was dried by a dryer at 80°C for 5 minutes, and thereby an anode including the anode current collector and the anode active material layer was obtained. Next, as a liquid electrolyte, LiPF₆ solution having the concentration of 1 M was prepared. As the solvent of the liquid electrolyte, a mixture solvent in which ethylene carbonate (EC), dimethyl carbonate (DMC), and ethyl methyl carbonate (EMC) were mixed in a volume ratio of EC : DMC : EMC = 3 : 4 : 3 was used. By using the cathode, the anode, and the liquid electrolyte, a winding cylindrical shaped battery was obtained.

### [Comparative Example 2]

A precursor was obtained in the same manner as in Comparative Example 1. A Li source (LiOH) was added to the obtained precursor, mixed with an agate mortar, and thereby a first mixture was obtained. The adding amount of the Li source was adjusted so that a molar ratio (Li/NMC) of Li included in the Li source to the total (NCM) of Ni, Co, and Mn included in the precursor became 1.0. The obtained first mixture was burned in a burning furnace in the conditions of 600°C, an oxygen atmosphere, and 2 hours, to obtain a first burned body (step 1). After that, the first burned body was taken out from the burning furnace while maintaining the temperature in the burning furnace at 600°C, a molten salt containing Li (LiOH) and a La source (La(OH)₃) were added thereto, mixed with an agate mortar, and thereby a second mixture was obtained. The adding amount of the molten salt was adjusted so that Li/NCM became 0.3. Also, the adding amount of the La source was adjusted so that La/NCM became 0.005. The obtained second mixture was returned to the burning furnace in which 600°C was maintained, the temperature was raised until 700°C, and burned in the conditions of an oxygen atmosphere and 2 hours, to obtain a second burned body (step 2).

Next, the second burned body was taken out from the burning furnace while maintaining the temperature in the burning furnace at 700°C, a molten salt containing Li (LiOH) was added thereto, mixed with an agate mortal, and thereby a third mixture was obtained. The adding amount of the molten salt was adjusted so that Li/NCM became 0.3. The obtained third mixture was returned to the burning furnace in which 700°C was maintained, the temperature was raised until 800°C, and burned in the conditions of an oxygen atmosphere and 2 hours, to obtain a third burned body (step 3). After that, the third burned body was taken out from the burning furnace while maintaining the temperature in the burning furnace at 800°C, a molten salt containing Li (LiOH) and a W source (H₂WO₄) were added thereto, mixed with an agate mortar, and thereby a fourth mixture was obtained. The adding amount of the molten salt was adjusted so that Li/NCM became 0.3. Also, the adding amount of the W source was adjusted so that W/NCM became 0.005. The obtained fourth mixture was returned to the burning furnace in which 800°C was maintained, the temperature was raised until 900°C, and burned in the conditions of an oxygen atmosphere and 2 hours, to obtain a fourth burned body (step 4). The obtained fourth burned body was cracked using jet milling, the particle size was adjusted, and thereby a cathode active material was obtained. A battery was obtained in the same manner as in Comparative Example 1 except that the obtained cathode active material was used.

### [Example 1]

A cathode active material and a battery were obtained in the same manner as in Comparative Example 2 except that the burning temperatures in the steps 1, 2, 3, and 4 were changed to 500°C, 600°C, 700°C, and 800°C, and the adding amount of the molten salt in steps 1, 2, 3, and 4 were changed as shown in Table 1.

### [Example 2]

A cathode active material and a battery were obtained in the same manner as in Comparative Example 2 except that the adding amount of the molten salt in steps 2, 3, and 4 were changed as shown in Table 1.

**[Table 1]**

| | Ratio | | | | | | Adding amount of Li | | | |
|---|---|---|---|---|---|---|---|---|---|---|
| | Li | Ni | Co | Mn | La | W | Step 1 | Step 2 | Step 3 | Step 4 |
| Comp. Ex. 1 | 1.9 | 0.8 | 0.1 | 0.1 | - | - | 1.0 | 0.3 | 0.3 | 0.3 |
| Comp. Ex. 2 | 1.9 | 0.8 | 0.1 | 0.1 | 0.005 | 0.005 | 1.0 | 0.3 | 0.3 | 0.3 |
| Example 1 | 2.0 | 0.8 | 0.1 | 0.1 | 0.005 | 0.005 | 1.0 | 0.2 | 0.2 | 0.6 |
| Example 2 | 2.0 | 0.8 | 0.1 | 0.1 | 0.010 | 0.010 | 1.0 | 0.1 | 0.1 | 0.8 |

### [Evaluation]

### <SEM-EDX measurement>

To the cathode active materials obtained in Examples 1, 2 and Comparative Examples 1, 2, cross-section observation and element analysis were performed by a scanning electron microscope - energy dispersive X-ray spectroscopy (SEM-EDX). As a result, it was confirmed that the primary particles in Examples 1, 2, and Comparative Examples 1, 2 had Ni, Co, and Mn. Also, in Examples 1, 2 and Comparative Example 1, 2, a compound in a particle shape was confirmed on the surface of the primary particles, and it was confirmed that the compound in the particle shape had La, Ni, and O from the mapping image. Also, the long side, the short side, and the aspect ratio of each cathode active material were obtained. The results are shown in Table 2.

### <TEM-EDX measurement>

To the cathode active materials obtained in Examples 1, 2 and Comparative Example 2, cross-section observation and element analysis were performed by a transmission electron microscope - energy dispersive X-ray spectroscopy (TEM-EDX). As a result, a compound in a film shape was confirmed on the surface of the primary particles in Examples 1, 2 and Comparative Example 2, and it was confirmed that the compound in the film shape had W and O from the mapping image.

### <XRD measurement>

An X-ray diffraction (XRD) measurement using CuKα ray was respectively conducted to the cathode active materials obtained in Examples 1, 2 and Comparative Examples 1, 2. As a result, it was confirmed that all the cathode active materials obtained in Examples 1, 2 and Comparative Examples 1, 2 had the layered rock salt type crystal phase belonging to the space group R-3m. In other words, it was confirmed that the primary particle containing Ni, Co, and Mn included the layered rock salt type crystal phase.

Also, in the cathode active materials obtained in Examples 1, 2 and Comparative Example 2, a peak derived from the crystal phase of LaNiO series (La₄LiNiO₈) was confirmed. For this reason, it was confirmed that the compound A present on the surface of the primary particle was crystalline. Meanwhile, in the cathode active materials obtained in Examples 1, 2 and Comparative Example 2, a peak derived from the crystal phase of LiWO series was not confirmed. For this reason, it is presumed that the compound B present on the surface of the primary particle was amorphous.

### <Present ratio of compound A and compound B>

The P_{SA} and the P_{LA} in each cathode active material were obtained based on the results of SEM-EDX and TEM-EDX described above. When the P_{SA} > the P_{LA}, it means that the compound A is dominantly present on the (104) surface, and when the P_{SA} < P_{LA}, it means that the compound A is dominantly present on the (003) surface. Similarly, the P_{SB} and the P_{LB} in each cathode active material were obtained. When the P_{SB} > P_{LB}, it means that the compound B is dominantly present on the (104) surface, and when the P_{SB} < P_{LB}, it means that the compound B is dominantly present on the (003) surface. The results are shown in Table 2.

### <Initial resistance>

The initial resistance of the batteries obtained in Examples 1, 2 and Comparative Examples 1, 2 was respectively measured. In specific, the batteries were charged until 4.3 V, and then discharged until 3.7 V. After that, the voltage drop (V) when discharged for 10 seconds under the conditions of 0°C and each C rate of 0.1 C, 0.3 C, 0.5 C, 0.7 C, and 1.0 C was respectively measured. The relation of the voltage drop (V) with respect to the current value was plotted, and the inclination when a close to straight line was drawn by a linear function was defined as a resistance (IV resistance). The results are shown in Table 2. Incidentally, the value of initial resistance in Table 2 is the relative value when the initial resistance of Comparative Example 1 is regarded as 100%.

### <Cycle capacity durability>

The cycle capacity durability was measured using the batteries obtained in Examples 1, 2 and Comparative Examples 1, 2. First, the initial discharge capacity of the battery was respectively obtained. In specific, the batteries were charged until 4.25 V, discharged at 0.2 C until 2.5 V, and the initial discharge capacity was obtained at 25°C.

Next, a cycle test in the below conditions was performed.
- Surrounding temperature : 60°C
- Cycle number: 100
- Current rate: 0.3 C
- Voltage range: from 4.25 V to 2.5 V

After the cycle test, the discharge capacity after 100 cycles was obtained in the same manner as the above. The cycle capacity durability was respectively obtained by dividing the discharge capacity after 100 cycles by the initial discharge capacity. The results are shown in Table 2.

**[Table 2]**

| | Primary particle | | | Compound | | Presence dominant surface | | Initial resistance (%) | Cycle capacity durability (%) |
|---|---|---|---|---|---|---|---|---|---|
| | Long side (x) | Short side (y) | x/y | A | B | La | W | | |
| Comp. Ex. 1 | 1.3 | 1.1 | 1.18 | - | - | - | - | 100 | 79 |
| Comp. Ex. 2 | 1.2 | 1.1 | 1.09 | ○ | ○ | (003)sf. | (003)sf. | 101 | 77 |
| Example 1 | 2.3 | 0.8 | 2.88 | ○ | ○ | (104)sf. | (104) sf. | 92 | 89 |
| Example 2 | 2.1 | 0.7 | 3.00 | ○ | ○ | (104)sf. | (104) sf. | 89 | 91 |

As shown in Table 2, it was confirmed that the resistance was lower in Examples 1 and 2 compared to Comparative Examples 1 and 2. It is presumed that, since the compound A (compound A containing La, Ni and O) with excellent electron conductivity, and the compound B (compound B containing Li, W and O) with excellent ion conductivity were present a lot on the second surface (where Li ions pass through), the movements of electrons and ions were smooth. Also, it was confirmed that the cycle capacity durability was higher in Examples 1 and 2, compared to Comparative Examples 1 and 2. It is presumed that, since the compound B (compound B containing Li, W and O) with low electron conductivity was present a lot on the second surface, the accumulation of the resistance component (decomposition product) generated by the side reaction due to electron conduction easily occurred.

### Reference Sings List

- 1: primary particle
- 10: cathode active material
- 11: cathode active material layer
- 12: anode active material layer
- 13: electrolyte layer
- 14: cathode current collector
- 15: anode current collector
- 20: battery

## Claims

1. A cathode active material **characterized by** comprising:
a crystalline primary particle containing Li, TM, which is a transition metal, and O, wherein
the cathode active material is a single crystalline active material configured by the primary particle;
the cathode active material includes at least one of a compound A containing La, Ni, and O, and a compound B containing Li, W, and O, on a surface of the primary particle;
the primary particle includes a crystal structure belonging to a space group R-3m;
in an observation by a scanning electron microscope, the primary particle includes a long side that extends along (003) surface, and a short side that is connected to the long side and is shorter than the long side;
an angle formed by the long side and the short side is 60° or more and 120° or less;
a ratio of a length of the long side to a length of the short side is 1.1 or more; and
the cathode active material satisfies at least one of (i) and (ii) below:
(i) the cathode active material includes the compound A, and a ratio P_{SA} of the compound A in the short side is larger than a ratio P_{LA} of the compound A in the long side;
(ii) the cathode active material includes the compound B, and a ratio P_{SB} of the compound B in the short side is larger than a ratio P_{LB} of the compound B in the long side.

2. The cathode active material according to claim 1, **characterized in that** the cathode active material satisfies the (i).

3. The cathode active material according to claim 1, **characterized in that** the cathode active material satisfies the (ii).

4. The cathode active material according to claim 1, **characterized in that** the cathode active material satisfies both of the (i) and the (ii).

5. The cathode active material according to claim 1, **characterized in that** the length of the long side is 0.5 µm or more.

6. The cathode active material according to claim 1, **characterized in that** the primary particle contains at least one kind of Ni, Co, and Mn as the TM.

7. The cathode active material according to claim 1, **characterized in that** the compound A is in a particle shape.

8. The cathode active material according to claim 1, **characterized in that** the compound B is in a film shape.

9. A cathode mixture **characterized by** comprising the cathode active material according to any one of claims 1 to 8.

10. A battery comprising a cathode active material layer containing a cathode active material, an anode active material layer containing an anode active material, and an electrolyte layer arranged between the cathode active material layer and the anode active material layer, **characterized in that**
the cathode active material layer contains the cathode mixture according to claim 9.

11. A method for producing the cathode active material according to claim 4, the method **characterized by** comprising:
a first burning step of burning a first mixture that includes: a transition metal hydroxide containing the TM; a Li source; and a Ni source, at a temperature T₁ to obtain a first burned body,
a second burning step of burning a second mixture, which is produced by adding a molten salt and a La source to the first burned body, at a temperature T₂,which is higher than the temperature T₁, to obtain a second burned body,
a third burning step of burning a third mixture, which is produced by adding a molten salt to the second burned body, at a temperature T₃, which is higher than the temperature T₂, to obtain a third burned body, and
a fourth burning step of burning a fourth mixture, which is produced by adding a molten salt and a W source to the third burned body, at a temperature T₄, which is higher than the temperature T₃, to obtain a fourth burned body, wherein
a content of the molten salt in the fourth mixture is more than a content of the molten salt in the third mixture.
